# EUROPEAN PATENT SPECIFICATION

(11) **EP 0 489 918 B1**
(45) Date of publication and mention of the grant of the patent: **16.12.1998**
(21) Application number: 91906704.1
(22) Date of filing: 03.04.1991
(51) Int. Cl.: C08L 33/04, C08L 43/04, C09D 133/04

(54) **ONE-LIQUID TYPE COMPOSITION**
EINZEL-FLÜSSIGKEIT ZUSAMMENSETZUNG
COMPOSITION DU TYPE MONOLIQUIDE

(30) Priority: 28.06.1990 JP 171759/90
(43) Date of publication of application: 17.06.1992
(73) Proprietor: KANEGAFUCHI KAGAKU KOGYO KABUSHIKI KAISHA, Kita-ku, Osaka-shi, Osaka 530 (JP)
(72) Inventor: NANBU, Toshiro, Kobe-shi, Hyogo 655 (JP); KAWAGUCHI, Hirotoshi, Akashi-shi, Hyogo 673 (JP); KATO, Yasushi, Kobe-shi, Hyogo 653 (JP)
(74) Representative: Hrabal, Ulrich, Dr.
(86) International application number: JP9100448
(87) International publication number: WO9200352

(56) References cited:
- EP-A- 0 396 914
- EP-A- 0 400 303
- EP-A- 0 419 669
- JP-A- 1 141 952
- JP-B- 6 354 747

## Description

### TECHNICAL FIELD

The present invention relates to a one component composition which is used for various coatings such as coatings for outer walls of buildings, automobiles, industrial machines, steel furnitures, household electric appliances and plastics, especially, for coatings applied to uses requiring to have an excellent durability.

### BACKGROUND ART

Conventional thermosetting coatings are ones wherein there is used as a crosslinking agent a melamine such as an alkyd melamine, an acrylic melamine or an epoxy melamine, so they are ones wherein the problem of bad-smelling caused by the melamine resin remains to be solved.

In order to solve these problems, the present inventors found a crosslinking system of a polyol resin and a hydrolyzable silyl group-containing resin which is quite different from a conventional crosslinking system of a polyol resin and a melamine resin, and filed already a patent application (see Japanese Unexamined Patent Publication 1-141952).

However, when such a mixture of the polyol resin and the hydrolyzable silyl group-containing polymer is used without a curing catalyst, the curing speed is slow at room temperature or under heating at a relatively low temperature. Accordingly, it is required to heat the mixture at a high temperature when desired to coat and cure at a high speed, so a large amount of energy is consumed.

Such disadvantages can be, generally, improved by admixing a curing catalyst just before the use, whereby the curing speed of the coating film is heightened even at a relatively low temperature. However, if admixing the curing catalyst once, such compositions, which are used as a paint, coating agent, adhesive, sealant, coupling agent and the like, cannot be stored, since the compositions are cured in a short period of time. Accordingly, for instance, the rest of the composition used for coating quite comes to noting (such compositions are generally called as "two component composition").

When there is aimed at a film formation utilizing a siloxy-crosslinking owing to a reaction of hydroxyl group of an acrylic resin having hydroxyl group with an alkoxysilyl group of an alkoxysilyl group-containing acrylic copolymer, a composition is required to contain an acrylic resin having hydroxyl groups enough to sufficiently crosslink. In such a case, hydroxyl group and the alkoxysilyl group are gradually reacted even in absence of a catalyst, thus resulting in gelation. Much less, it is technically difficult to stably store the composition containing a curing catalyst over several months.

### DISCLOSURE OF THE INVENTION

In order to solve these problems, the present inventors have repeated an earnest study. As a result, they have found that even mixtures of an acrylic resin having hydroxyl groups which contains a curing catalyst and an alkoxysilyl group-containing acrylic copolymer can be made into a one component composition by further adding a combination of methanol and n-butanol and optionally a dehydrating agent and have accomplished the present invention.

Accordingly the present invention is directed to a composition comprising:
(A) an acrylic resin having hydroxyl groups,
(B) an alkoxysilyl group-containing acrylic copolymer having a group represented by the general formula: 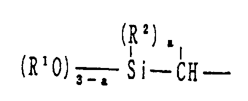 wherein R¹ is an alkyl group having 1 to 10 carbon atoms R² is a hydrogen atom or a monovalent hydrocarbon group having 1 to 10 a carbon atoms selected from the group consisting of an alkyl group, an aryl group and an aralkyl group, and a is 0, 1 or 2,
(C) a curing catalyst,
(E) a combination of methanol and n-butanol and optionally (D) a dehydrating agent, wherein said composition is in the form of a one component composition containing all said components (A), (B), (C), (E) and optionally (D).

The composition of the present invention is excellent in storage stability and is excellent in workability on coating.

The acrylic resin having hydroxyl groups used in the present invention which is the component (A) [hereinafter also referred to as "acrylic resin having hydroxyl groups (A)"] is a component used for exhibiting film properties such as hardness immediately after sintering and solvent resistance. Since its main chain is substantially composed of an acrylic copolymer chain, the weatherability, chemical resistance and water resistance of the cured product are improved.

The acrylic resin having hydroxyl groups (A) can be obtained by, for instance, copolymerization of a hydroxyl group-containing vinyl monomer with acrylic acid, methacrylic acid or their derivatives.

The reaction of moisture in the composition with the dehydrating agent progresses faster than the reaction of the alkoxysilyl group of the polymer (B) with the moisture, owing to the copolymerization of the acidic monomer such as acrylic acid or methacrylic acid, thereby improving the stability of one component composition.

As the hydroxyl group-containing vinyl monomer to be included as the above-mentioned copolymerizable component, there are exemplified, for instance, 2-hydroxyethyl (meth)acrylate, 2-hydroxypropyl (meth)acrylate, 2-hydroxyethyl vinyl ether, N-methylol (meth)acrylamide, Aronix 5700 made by Toagosei Chemical Industry Co., Ltd., 4-hydroxyl styrene, HE-10, HE-20, HP-10 and HP-20 which are products made by Nippon Shokubai Kagaku Kogyo Kabushiki Kaisha (which are acrylate oligomers having hydroxyl groups at the oligomer end), Blenmer PP series (polypropylene glycol methacrylate), Blenmer PE serives (polyethylene glycol monomethacrylate), Blenmer PEP serives (polyethylene glycol polypropylene glycol methacrylate), Blenmer AP-400 (polypropylene glycol monoacrylate), Blenmer AE-350 (polyethylene glycol monoacrylate), Blenmer NKH-5050 (polypropylene glycol polytrimethylene monoacrylate) and Blenmer GLM (glycerol monomethacrylate), which are products made by Nippon Yushi Kabushiki Kaisha, and an ε-caprolactone-modified hydroxyalkyl vinyl monomer obtained by reaction of a hydroxyl group-containing vinyl compound with ε-caprolactone.

As typical examples of the ε-caprolactone-modified hydroxyalkyl vinyl monomers, there are exemplified, for instance, monomers having a structure represented by the formula: 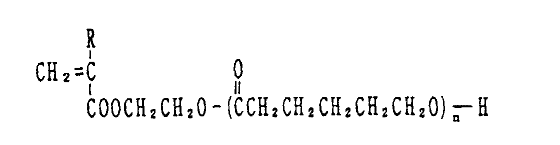 wherein R is H or CH₃ and n is an integer of not less than one, such as Placcel FA-1 (R=H, n=1), Placcel FA-4 (R=H, n=4), Placcel FM-1 (R=CH₃, n=1) and Placcel FM-4 (R=CH₃, n=4) which are products made by Daicel Chemical Industries, Ltd., TONE M-100 (R=H, n=2) and TONE M-201 (R= CH₃, n=1) which are products made by UCC. By using the ε-caprolactone-modified hydroxyalkyl vinyl monomer as the hydroxyl group-containing vinyl monomer, the impact resistance and the flexibility of the coating film can be improved.

These hydroxyl group-containing vinyl monomers may be used alone or as a mixture thereof.

The derivatives of acrylic acid or methacrylic acid copolymerizable with the hydroxyl group-containing vinyl monomer are not particularly limited. As their concrete examples, there are exemplified, for instance, methyl (meth)acrylate, ethyl (meth)acrylate, butyl (meth)acrylate, 2-ethylhexyl (meth)acrylate, stearyl (meth)acrylate, benzyl (meth)acrylate, cyclohexyl (meth)acrylate, trifluoroethyl (meth)acrylate, pentafluoropropyl (meth)acrylate, perfluorocyclohexyl (meth)acrylate, (meth)acrylonitrile, glycidyl (meth)acrylate, dimethylaminoethyl (meth)acrylate, diethylaminoethyl (meth)acrylate, (meth)acrylamide, α-ethyl (meth)acrylamide, N-butoxymethyl (meth)acrylamide, N, N-dimethyl acrylamide, N-methyl acrylamide, acryloyl morpholine, N-methylol (meth)acrylamide, AS-6, AN-6, AA-6, AB-6 and AK-5, which are macromers made by Toagosei Chemical Industry Co., Ltd., a phosphate group-containing vinyl compound which is a condensation product of a hydroxyalkyl ester of α,β-ethylenically unsaturated carboxylic acid such as a hydroxyalkyl ester of (meth)acrylic acid with phosphoric acid or a phosphoric ester, and a (meth)acrylate containing an urethane bond or siloxane bond.

The copolymer may contain segments formed by an urethane bond or siloxane bond or segments derived from monomers other than (meth)acrylic acid derivatives in its main chain within a range of less than 50 % (% by weight, hereinafter the same). The monomers are not limited. Examples of the monomers are, for instance, an aromatic hydrocarbon vinyl compound such as styrene, α-methylstyrene, chlorostyrene, styrenesulfonic acid or vinyl toluene; an unsaturated carboxylic acid such as maleic acid, fumaric acid or itaconic acid, its salt (alkali metal salt, ammonium salt, amine salt), its acid anhydride (maleic anhydride), or an ester of an unsaturated carboxylic acid such as a diester or half ester thereof with a linear or branched alcohol having 1 to 20 carbon atoms; a vinyl ester or an allyl compound such as vinyl acetate, vinyl propionate or diallyl phthalate; an amino group-containing vinyl compound such as vinylpyridine or aminoethyl vinyl ether; an amide group-containing vinyl compound such as itaconic acid diamide, crotonamide, maleic acid diamide, fumaric acid diamide or N-vinylpyrrolidone; other vinyl compounds such as methyl vinyl ether, cyclohexyl vinyl ether, vinyl chloride, vinylidene chloride, chloroprene, propylene, butadiene, isoprene, fluoroolefin maleimide, N-vinylimidazole and vinylsulfonic acid.

It is preferable that the acrylic resin having hydroxyl group (A) is prepared by solution polymerization using an azo radical polymerization initiator such as azobisisobutyronitrile, because of the easiness of synthesis.

In the solution polymerization, if necessary, a chain transfer agent such as n-dodecyl mercaptane, t-dodecyl mercaptane or n-butyl mercaptane is used, thereby controlling the molecular weight.

Any non-reactive solvents are used without particular limitations as the polymerization solvent. The acrylic resin having hydroxyl groups (A) may be used in the state of a solution, or as a non-aqueous dispersion type wherein the insoluble polymer particles are dispersed in a non-polar organic solvent such as heptane or pentane.

The molecular weight of the acrylic resin having hydroxyl groups (A) is not particularly limited. It is preferable that the number average molecular weight is from 1,500 to 40,000, more preferably from 3,000 to 25,000, from the viewpoint of the film properties (the properties of the film prepared from the composition of the present invention) such as durability. Also, it is preferable that the resin (A) has hydroxyl groups enough to sufficiently crosslink. It is preferable that the hydroxyl value is from 10 to 300 mg KOH/g, more preferably from 30 to 150 mg KOH/g, from the viewpoint of the film properties such as strength and durability.

Such acrylic resins having hydroxyl groups (A) may be used alone or as a mixture thereof.

The alkoxysilyl group-containing acrylic copolymer used in the present invention which is the component (B) [ hereinafter also referred to as "alkoxysilyl group-containing acrylic copolymer (B)"] is a polymer having, in one molecule, at least one, preferably not less than two alkoxysilyl groups represented by the formula: 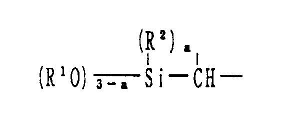 at its ends and(or) side chains.

In the above-mentioned formula, R¹ is an alkyl group having 1 to 10, preferably from 1 to 4, carbon atoms. When the number of carbon atoms is more than 10, the reactivity of the alkoxysilyl group is lowered. Also, when the group R¹ is a group other than the alkyl group, such as phenyl group or benzyl group, the reactivity is lowered. Examples of the groups R¹ are, for instance, methyl group, ethyl group, n-propyl group, iso-propyl group, n-butyl group and isobutyl group.

In the above-mentioned formula, R² is a hydrogen atom, or a monovalent hydrocarbon group having 1 to 10, preferably from 1 to 4, carbon atoms selected from the group consisting of an alkyl group, an aryl group and an aralkyl group.

Examples of the alkyl groups having 1 to 10 carbon atoms which are one kind of the group R² are the same groups as the group R¹, examples of the aryl groups are, for instance, phenyl group, and examples of the aralkyl groups are, for instance, benzyl group.

In the above-mentioned formula, a is 0, 1 or 2.

Examples of the alkoxysilyl group represented by the above-mentioned formula are, for instance, groups contained in alkoxysilyl group-containing monomers as mentioned below.

The main chain of the alkoxysilyl group-containing acrylic copolymer (B) is substantially composed of the acrylic copolymer chain, so the cured product is improved in weatherability, chemical resistance and water resistance. Further, the alkoxysilyl group is bonded to carbon atom, so the cured product is, for example, improved in water resistance, alkali resistance and acid resistance.

When the number of the alkoxysilyl groups in the alkoxysilyl group-containing acrylic copolymer (B) is less than one in one molecule, it becomes easy to lower the solvent resistance of the obtained film from the composition of the present invention.

The number average molecular weight of the alkoxysilyl group-containing acrylic copolymer (B) is from 1,000 to 30,000, particularly preferably from 3,000 to 25,000, from the viewpoint of the properties such as durability of the film obtained from the composition of the present invention.

The alkoxysilyl group-containing acrylic copolymer (B) can be obtained, for instance, by copolymerization of acrylic acid, methacrylic acid or a derivative therefrom with an alkoxysilyl group-containing monomer.

The derivatives of acrylic acid or methacrylic acid are not limited. Examples thereof are, for instance, methyl (meth)acrylate, ethyl (meth)acrylate, butyl (meth)acrylate, 2-ethylhexyl (meth)acrylate, stearyl (meth)acrylate, benzyl (meth)acrylate, cyclohexyl (meth)acrylate, trifluoroethyl (meth)acrylate, pentafluoropropyl (meth)acrylate, perfluorocyclohexyl (meth)acrylate, (meth)acrylonitrile, glycidyl (meth)acrylate, dimethylaminoethyl (meth)acrylate, diethylaminoethyl (meth)acrylate, (meth)acrylamide, α-ethyl (meth)acrylamide, N-butoxymethyl (meth)acrylamide, N, N-dimethyl acrylamide, N-methyl acrylamide, acryloyl morpholine, 2-hydroxyethyl (meth)acrylate, 2-hydroxypropyl (meth)acrylate, N-methylol (meth)acrylamide, Aronix M-5700 made by Toagosei Chemical Industry Co., Ltd., AS-6, AN-6, AA-6, AB-6, and AK-5, which are macromers made by Toagosei Chemical Industry Co., Ltd., Placcel FA-1, Placcel FA-4, Placcel FM-1 and Placcel FM-4, which are products made by Daicel Chemical Industries, Ltd., a phosphate group-containing vinyl compound which is a condensation product of a hydroxyalkyl ester of α,β-ethylenically unsaturated carboxylic acid such as a hydroxyalkyl ester of (meth)acrylic acid with phosphoric acid or a phosphoric ester, and a (meth)acrylate containing an urethane bond or siloxane bond. When the hydroxyl group-containing monomer is used, it is preferable to use it in a small amount (for instance, not more than 2 % of the copolymer).

The above-mentioned alkoxysilyl group-containing monomers are not particularly limited so long as the monomer has a polymerizable unsaturated double bond and has the alkoxysilyl group. Examples thereof are, for instance,

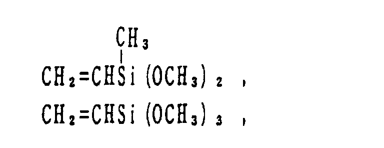

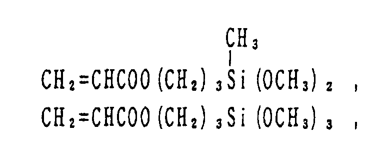

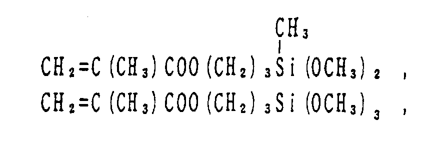

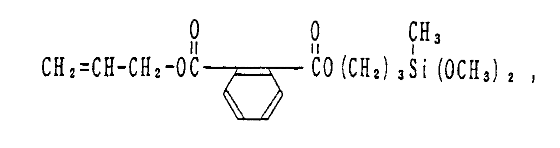

CH₂=C(CH₃)COO(CH₂)₃Si(OC₂H₅)₃,

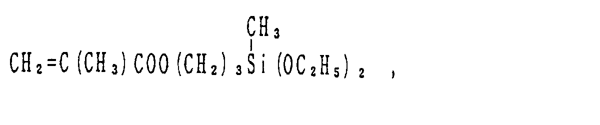

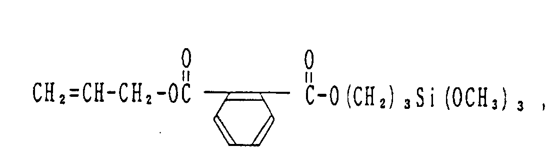

or
a (meth)acrylate having the alkoxysilyl group at the molecular ends through an urethane bond or a siloxane bond such as 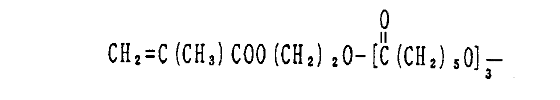 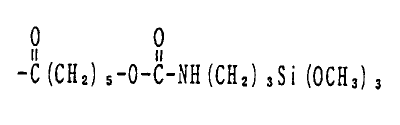 or

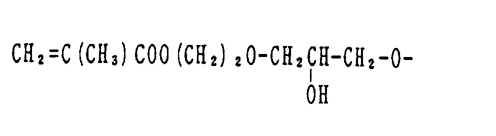

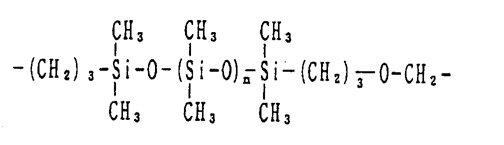

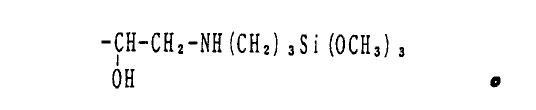

It is preferable that the alkoxysilyl group-containing acrylic copolymer (B) contains from 5 to 90 %, more preferably from 11 to 70 %, of units of the alkoxysilyl group-containing monomer, from the viewpoint of the curability of the composition and the durability of the film.

The copolymer may contain segments formed by an urethane bond or siloxane bond or segments derived from monomers other than the (meth)acrylic acid derivative in its main chain within a range of less than 50 %. The monomers are not limited. Examples of the monomers are, for instance, an aromatic hydrocarbon vinyl compound such as styrene, a α-methylstyrene, chlorostyrene, styrenesulfonic acid, 4-hydroxystyrene or vinyl toluene; an unsaturated carboxylic acid such as maleic acid, fumaric acid or itaconic acid, its salt (alkali metal salt, ammonium salt, amine salt), its acid anhydride (maleic anhydride), an ester of an unsaturated carboxylic acid such as a diester or half ester thereof with a linear or branched alcohol having 1 to 20 carbon atoms; a vinyl ester or an allyl compound such as vinyl acetate, vinyl propionate or diallyl phthalate; an amino group-containing vinyl compound such as vinylpyridine or aminoethyl vinyl ether; an amide group-containing vinyl compound such as itaconic acid diamide, crotonamide, maleic acid diamide, fumaric acid diamide or N-vinylpyrrolidone; and other vinyl compounds such as 2-hydroxyethyl vinyl ether, methyl vinyl ether, cyclohexyl vinyl ether, vinyl chloride, vinylidene chloride, chloroprene, propylene, butadiene, isoprene, fluoroolefin, maleimide, N-vinylimidazole or vinylsulfonic acid.

The alkoxysilyl group-containing acrylic copolymer (B) can be prepared, for instance, in a manner as shown in Japanese examined Patent Publication No. 54-36395, No. 57-36109 and No. 58-157810. A solution polymerization using an azo radical polymerization intiator such as azobisisobutyronitrile is the most preferable, from the viewpoint of the easiness of synthesis.

If necessary, in the above-mentioned solution polymerization, there is used a chain transfer agent such as n-dodecyl mercaptan, t-dodecyl mercaptan, n-butyl mercaptan, γ-mercaptopropyltrimethoxysilane, γ-mercaptopropyltriethoxysilane, γ-mercaptopropylmethyldimethoxysilane, γ-mercaptopropylmethyldiethoxysilane, (CH₃O)₃Si-S-S-Si-(OCH₃)₃ and (CH₃O)₃Si-S₈-Si(OCH₃)₃, whereby the molecular weight can be controlled. Particularly, when using the chain transfer agent having the alkoxysilyl group in its molecule, such as γ-mercaptopropyltrimethoxysilane, it is possible to introduce the alkoxysilyl group into the silyl group-containing acrylic copolymer at the polymer ends.

As the polymerization solvents used in the above-mentioned solution polymerization, there are used any non-reactive solvents such as hydrocarbons (toluene, xylene, n-hexane and cyclohexane), acetic esters (ethyl acetate and butyl acetate), alcohols (methanol, ethanol, isopropanol and n-butanol), ethers (ethyl cellosolve, butyl cellosolve and cellosolve acetate), and ketones (methyl ethyl ketone, ethyl acetoacetate, acetylacetone, diacetone alcohol, methyl isobutyl ketone and acetone) without particular restrictions.

The alkoxysilyl group-containing polymer (B) may be used alone or as a mixture thereof.

The used ratio of the alkoxysilyl group-containing polymer (B) is not particularly limited. It is preferable that the component (A) / the component (B) is from 9/1 to 1/9, more preferably from 8/2 to 2/8 in weight ratio. When the ratio of the component (A) / the component (B) is more than 9/1, the film obtained from the composition of the present invention tends to lower in water resistance. When the ratio is less than 1/9, there is a tendency that the effects obtained by addition of the component (A) are unsatisfactorily obtained.

Examples of the curing catalyst used in the present invention which is the component (C) [hereinafter also referred to as "curing catalyst (C)"] are, for instance, an organotin compound such as dibutyl tin dilaurate, dibutyl tin dimaleate, dioctyl tin dilaurate, dioctyl tin dimaleate or tin octoate; phosphoric acid or a phosphoric ester such as phosphoric acid, monomethyl phosphate, monoethyl phosphate, monobutyl phosphate, monooctyl phosphate, monodecyl phosphate, dimethyl phosphate, diethyl phosphate, dibutyl phosphate, dioctyl phosphate or didecyl phosphate; an addition reaction product of phosphoric acid and(or) monoacid phosphate with an epoxy compound such as propylene oxide, butylene oxide, cyclohexene oxide, glycidyl methacrylate, glycidol, acryl glycidyl ether, γ-glycidoxypropyltrimethoxysilane, γ-glycidoxypropyltriethoxysilane, γ-glycidoxypropylmethyldimethoxysilane, 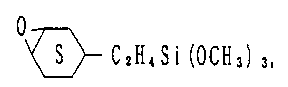 Cardula E made by Yuka Shell Epoxy Kabushiki Kaisha, or Epicote 828 or Epicote 1001, which is a product made by Yuka Shell Epoxy Kabushiki Kaisha; an organic titanate compound; an organic aluminum compound; an acidic compound such as maleic acid, adipic acid, azelaic acid, sebacic acid, itaconic acid, citric acid, succinic acid, phthalic acid, trimellitic acid, pyromellitic acid, their acid anhydrides or p-toluenesulfonic acid; amines such as hexylamine, di-2-ethylhexylamine, N,N-dimethyldodecylamine or dodecylamine; a mixture or a reaction product of the amine with the acid phosphate; and an alkali compound such as sodium hydroxide or potassium hydroxide.

Among these curing catalysts (C), there are preferable the organotin compound, the acid phosphate, the mixture or the reaction product of the acid phosphate and the amine, the saturated or unsaturated polyvalent carboxylic acid or its acid anhydride, the reactive silicon compound, the organic titanate compound, the organic aluminum compound, and the mixture thereof, because of the high activity.

The curing catalyst (C) may be used alone or as a mixture thereof.

The amount of the component (C) is not particularly limited. The amount is usually from 0.1 to 20 parts (parts by weight, hereinafter the same), preferably from 0.1 to 10 parts, based on 100 parts of the solid matter of the component (A) and the component (B). When the used amount of the component (C) is less than 0.1 part, the curability tends to lower. When the amount is more than 20 parts, the appearance of the film tends to lower.

In the composition of the present invention, the dehydrating agent (D) can optionally be included as the stabilizing agent.

Examples of the dehydrating agents which is the component (D) are, for instance, hydrolyzable ester compounds such as methyl orthoformate, ethyl orthoformate, methyl orthoacetate, ethyl orthoacetate, methyltrimethoxysilane, γ-methacryloyloxypropyltrimethoxysilane, vinyltrimethoxysilane, methyl silicate and ethyl silicate. These hydrolyzable ester compounds may be added before, after or during the polymerization of the alkoxysilyl group-containing acrylic copolymer (B).

As the dehydrating agent (D), methyl orthoacetate is particularly preferable, since the effect for stabilizing the one component composition is great.

The used amount of the dehydrating agent is not particularly limited. The amount is usually not more than 100 parts, preferably not more than 50 parts, based on 100 parts of the solid matter of the components (A) and (B).

The effect can be further increased by using a dehydrating accelerator when the dehydrating agent is used.

Preferable examples of the dehydrating accelerators are, for instance, an inorganic acid such as hydrochloric acid, sulfuric acid, phosphoric acid or nitric acid; an organic acid such as formic acid, acetic acid, oxalic acid, benzoic acid, phtharic acid, p-toluenesulfonic acid, acrylic acid or methacrylic acid; a metal salt of carboxylic acid such as an alkyl titanate or lead octylate; a carboxylic acid organotin compound such as tin octylate, dibutyl tin dilaurate, or dioctyl tin maleate; a sulfide or mercaptide organotin compound such as monobutyl tin sulfide or dioctyl tin mercaptide; an organotin oxide such as dioxtyl tin oxide; an organotin compound obtained by reaction of the organotin oxide with an ester compound such as ethyl silicate, Ethyl Silicate 40, dimethyl maleate or dioctyl phthalate; an amine such as tetraethylenepentamine, triethylenediamine or N-β-aminoethyl-γ-aminopropyltrimethyoxysilane; and an alkali catalyst such as potassium hydroxide or sodium hydroxide. The agents are not limited thereto. Among them, the organic acids, the inorganic acids and the organotin compounds are particularly effective.

The dehydrating accelerator is used in an amount of from 0.0001 to 20 parts, preferably from 0.001 to 10 parts, based on 100 parts of the dehydrating agent. When the compound which is used also as the component (C) is used as the dehydrating accelerator, the amount is from 0.1 to 20 parts, preferably from 0.1 to 10 parts, in addition to the used amount of the component (C).

The used amount of the combination of methanol and n-butanol (E) is not particularly limited. The amount is usually not more than 100 parts, preferably not more than 50 parts, based on 100 parts of the solid matter of the components (A) and (B). When the component (E) is used alone, without using the dehydrating agent (D), the amount is usually from 0.5 to 100 parts, preferably from 2 to 50 parts.

When the component (E) is used together with the dehydrating agent (D), the storage stability can be remarkably improved compared to the case where the composition comprising the components (A), (B), (C) and (D) is stored.

As the solvent used in the composition of the present invention, any non-reactive solvents can be used.

Examples of such solvents are, for instance, solvents used in general paints or coating agents such as aliphatic hydrocarbons, aromatic hydrocarbons, halogenated hydrocarbons, alcohols, ketones, esters, ethers, alcoholic esters, ketone alcohols, ether alcohols, ketone ethers, ketone esters or ester ethers.

The used amount of the total solvents varies depending on the molecular weight or composition of the component (A) and the component (B) in the composition of the present invention, so is not decided wholly. The amount is controlled so that the composition has a necessary solid concentration or viscosity for the practical use, and is usually from 250 to 25 parts based on 100 parts of the solid matter.

In order to improve the film properties such as adhesion, hardness and solvent resistance, a hydrolyzable silicon compound can be added to the composition of the present invention. The hydrolyzable silicon compound is a compound having a hydrolyzable silyl group at the ends or side chains, and preferable examples are, for instance, hydrolyzable silane compounds, condensation products of their partial hydrolyzates, their reaction products and their mixture.

Examples of the silane compounds are, for instance, methyl silicate, methyltrimethoxysilane, ethyltrimethoxysilane, butyltrimethoxysilane, octyltrimethoxysilane, dodecyltrimethoxysilane, phenyltrimethoxysilane, vinyltrimethoxysilane, γ-methacryloyloxypropyltrimethyoxysilane, γ-acryloyloxypropyltrimethoxylilane, γ-glycidoxypropyltrimethoxysilane, γ-mercaptopropyltrimethoxysilane, γ-aminopropyltrimethoxysilane, N-β-aminoethyl-γ-aminopropyltrimethoxy silane, dimethyldimethoxysilane, diethyldimethoxysilane, dibutyldimethoxysilane, diphenyldimethoxysilane, vinylmethyldimethoxysilane, γ-methacryloyloxypropylmethyldimethoxysilane, trimethylmethoxysilane, triethylmethoxysilane, triphenylmethoxysilane, ethyl silicate, methyltriethoxysilane, ethyltriethoxysilane, butyltriethoxysilane, octyltriethoxysilane, dodecyltriethoxysilane, phenyltriethoxysilane, vinyltriethoxysilane, γ-methacryloyloxypropyltriethoxysilane, γ-acryloyloxypropyltriethoxysilane, γ-glycidoxypropyltriethoxysilane, γ-mercaptopropyltriethoxysilane, γ-aminopropyltriethoxysilane, N-β-aminoethyl-γ aminopropyltriethoxysilane, dimethyldiethoxysilane, diethyldiethoxysilane, dibutyldiethoxysilane, diphenyldiethoxysilane, vinylmethyldiethoxysilane, γ-methacryloyloxypropylmethyldiethoxysilane, trimethylethoxysilane, triethylethoxysilane and triphenylmethoxysilane.

The condensation product of the partial hydrolyzate of the hydrolyzable silane compund can be easily produced by mixing one or more silane compounds as mentioned above with a necessary amount of H₂O and, if necessary, a small amount of a condensation catalyst such as hydrochloric acid or sulfuric acid, and advancing the condensation reaction at room temperature to 100°C while removing the produced alcohol. Examples of the condensation products of partial hydrolyzate of methyl silicate, having methoxysilyl group are, for instance, Methyl Silicate 47, Methyl Silicate 51, Methyl Silicate 55, Methyl Silicate 58 and Methyl Silicate 60, which are products made by Nippon Colcoat Kagaku Kabushiki Kaisha. Examples of the condensation products of partial hydrolyzate of methyltrimethoxysilane or dimethyldimethoxysilane, having methoxysilyl groups are, for instance, AFP-1, AFR-2, AFP-6, KR213, KR217 and KR9218, which are products made by Shin-Etsu Chemical Co., Ltd.; TSR165 and TR3357, which are products made by Toshiba Silicone Co., Ltd.; Y-1587, FZ-3701 and FZ-3704, which are products made by Nippon Unicar Kabushiki Kaisha. Examples of the condensation products of partial hydrolyzate of ethyl silicate, having ethoxysilyl group are, for instance, Ethyl Silicate 40, HAS-1, HAS-6 and HAS-10, which are products made by Nippon Colcoat Kagaku Kabushiki Kaisha.

Examples of the reaction products of the abovementioned hydrolyzable silane compound are, for instance, a reaction product of a silane coupling agent containing amino group with a silane coupling agent containing epoxy group; a reaction product of a silane coupling agent containing amino group with a compound containing epoxy group such as ethylene oxide, butylene oxide, epichlorohydrine, epoxidated soybean oil, in addition, Epicoat 828 and Epicoat 1001, which are products made by Yuka Shell Epoxy Kabushiki Kaisha; a reaction product of a silane coupling agent containing epoxy group with an amine such as an aliphatic amine e.g. ethyl amine, diethyl amine, triethyl amine, ethylene diamine, hexane diamine, diethylene triamine, triethylene tetramine or tetraethylene pentamine, an aromatic amine e.g. aniline or diphenyl amine, or an alicyclic amine such as cyclopentyl amine or cyclohexyl amine.

Such hydrolyzable silicon compounds may be used alone or as a mixture thereof.

The used amount of the hydrolyzable silicon compound is not particularly limited. The amount is usually from 0.01 to 100 parts, preferably from 0.1 to 30 parts, based on 100 parts of the solid matter of the components (A) and (B). When the used amount of the hydrolyzable silicon compound is less than 0.01 part, the addition effects are insufficiently obtained. When the amount is more than 100 parts, the appearance of the film prepared from the composition of the present invention tends to lower.

According to the uses, thereof, there can be added to the composition for instance of the present invention, various additives such as diluents, pigments (including extender pigments), ultraviolet absorbers, light stabilizers, agents for preventing precipitation and leveling agents; celluloses such as nitrocellulose and cellulose acetate butyrate; resins such as epoxy resins, melamine resins, vinyl chloride resins, chlorinated polypropylene, chlorinated rubbers and polyvinyl butyral; and fillers.

Next, the preparation method of the composition of the present invention is explained

The preparation method is not particularly limited. For instance, the component (A) and the component (B) are cold-blended, or they are mixed, then heated (hot-blended) to partially react them, and the component (C) and component (E) and optionally component (D) are mixed herewith to prepare the composition of the present invention.

The thus prepared composition of the present invention is a composition utilizing the crosslinking reaction wherein the hydroxyl group of the acrylic resin having hydroxyl group (A) reacts with the silyl group of the alkoxysilyl group-containing polymer (B), and is clearly distinct from conventional techniques using a melamine as the crosslinking agent.

The composition of the present invention is excellent in storage stability.

Such compositions of the present invention are suitable for use as coating agents used for various coatings such as coating for outer walls of buildings, automobiles, industrial machines, steel furnitures, household electric appliances and plastics, particularly, coating for use requiring to have excellent durability. The composition is applied to a substrate in a usual manner such as dipping, spraying or brushing, then is cured at usually not less than 30°C, preferably from 55° to 350°C to give a coating film having excellent durability.

### BEST MODE FOR CARRYING OUT THE INVENTION

The composition of the present invention is more specifically explained by means of Examples in which all part and % are part by weight and % by weight unless otherwise noted.

### Preparation Example 1

### [Synthesis of an alkoxysilyl group-containing polymer (B)]

A reaction vessel equipped with a stirrer, a thermometer, a condenser, a nitrogen inlet tube and a dropping funnel was charged with 45.9 parts of xylene, and the temperature was elevated to 100°C, while introducing nitrogen gas thereto. A mixture (b) having a composition shown below was added dropwise at a uniform velocity through the dropping funnel over 5 hours.

| (Mixture (b)) | |
|---|---|
| Styrene | 12.8 parts |
| Methyl methacrylate | 50.1 parts |
| Stearyl methacrylate | 6.9 parts |
| γ-Methacryloyloxypropyltrimethoxysilane | 30.2 parts |
| Xylene | 13.5 parts |
| 2,2'-Azobisisobutyronitrile | 4.5 parts |

After completing the dropping addition of the mixture (b), 0.5 part of 2,2'-azobisisobutyronitrile and 5 parts of toluene were added dropwise at a uniform velocity over 1 hour. After completing the dropping addition, it was aged at 110°C over 2 hours, then was cooled down and xylene was added to the resin solution so as to adjust the solid content to 60 %. The properties of the resin solution (1) are shown in Table 1.

### Preparation Example 2

### [Synthesis of an acrylic resin having hydroxyl groups (A-1)]

The reaction vessel was charged with 31.3 parts of butyl acetate and 9.5 parts of xylene instead of 45.9 parts of xylene, and a mixture (a-1) having the following composition was added in the same manner as in Preparation Example 1.

### (Mixture (a-1))

| | |
|---|---|
| Xylene | 18 parts |
| Styrene | 28.3 parts |
| Methyl methacrylate | 7.1 parts |
| n-Butyl acrylate | 32.5 parts |
| Methacrylic acid | 0.3 part |
| Placcel FM-1^{*1} | 31.8 parts |
| 2,2'-Azobisisobutyronitrile | 4.5 parts |

| | |
|---|---|
| [Note] ^{*1}: Addition reaction product of 2-hydroxyethyl methacrylate/ε -caprolactone = 1 : 1 made by Daicel Chemical Industries, Ltd. | |

After completing the dropping addition of the mixture (a-1), 0.2 part of 2,2'-azobisisobutyronitrile and 3.8 parts of toluene were added dropwise at a uniform velocity over 1 hour. After completing the dropping addition, it was aged at 110°C for 2 hours, then was cooled down, and xylene was added to the resin solution so as to adjust the resin content to 60 %. The properties of the resin solution (2) are shown in Table 1.

### Preparation Example 3

### [ Synthesis of an acrylic resin having hydroxyl groups (A-2)]

The reaction vessel was charged with 31.3 parts of butyl acetate and 9.5 parts of xylene instead of 45.9 parts of xylene, and a mixture (a-2) having the following composition was added in the same manner as in Preparation Example 1.

| (Mixture (a-2)) | |
|---|---|
| Xylene | 18 parts |
| Styrene | 28.3 parts |
| Methyl methacrylate | 4.4 parts |
| n-Butyl acrylate | 32.5 parts |
| Acrylic acid | 3 parts |
| Placcel FM-1^{*1} | 31.8 parts |
| 2,2'-Azobisisobutyronitrile | 4.5 parts |

| | |
|---|---|
| [Note] ^{*1}: Addition reaction product of 2-hydroxyethyl methacrylate/ε -caprolactone = 1 : 1 made by Daicel Chemical Industries, Ltd. | |

After completing the dropping addition of the mixture (a-2), 0.2 part of 2,2'-azobisisobutyronitrile and 3.8 parts of toluene were added dropwise at a uniform velocity over 1 hour. After completing the dropping addition, it was aged at 110°C for 2 hours, then was cooled down, and xylene was added to the resin solution so as to adjust the resin content to 60 %. The properties of the resin solution (3) are shown in Table 1.

**Table 1**

| Resin solution | (1) | (2) | (3) |
|---|---|---|---|
| Property | | | |
| Non-volatile matter (%) | 60 | 60 | 60 |
| | | | |
| Viscosity (28°C, mPas (cps)) | 900 | 850 | 980 |
| | | | |
| Acid value (mgKOH/g solid) | 0 | 2.0 | 23 |
| | | | |
| Hydroxyl value (mgKOH/g solid) | 0 | 73 | 73 |
| | | | |
| Number average molecular weight | 6.000 | 6.000 | 6.000 |
| | | | |
| Hue (Gardner) | < 1 | <1 | <1 |

### Examples 1 - 7 and Comparative Examples 1 - 3

Using each resin solution obtained in Preparation Examples 1 - 3, a composition as shown in Tables 2 and 3 was prepared.

The obtained composition was subjected to a storing test wherein it was allowed to stand at 50°C for 7 days or for 14 days under sealing. The viscosities before storage and after storage were measured at 23°C by using a Brook-field type viscometer. The results are shown in Tables 2 and 3.

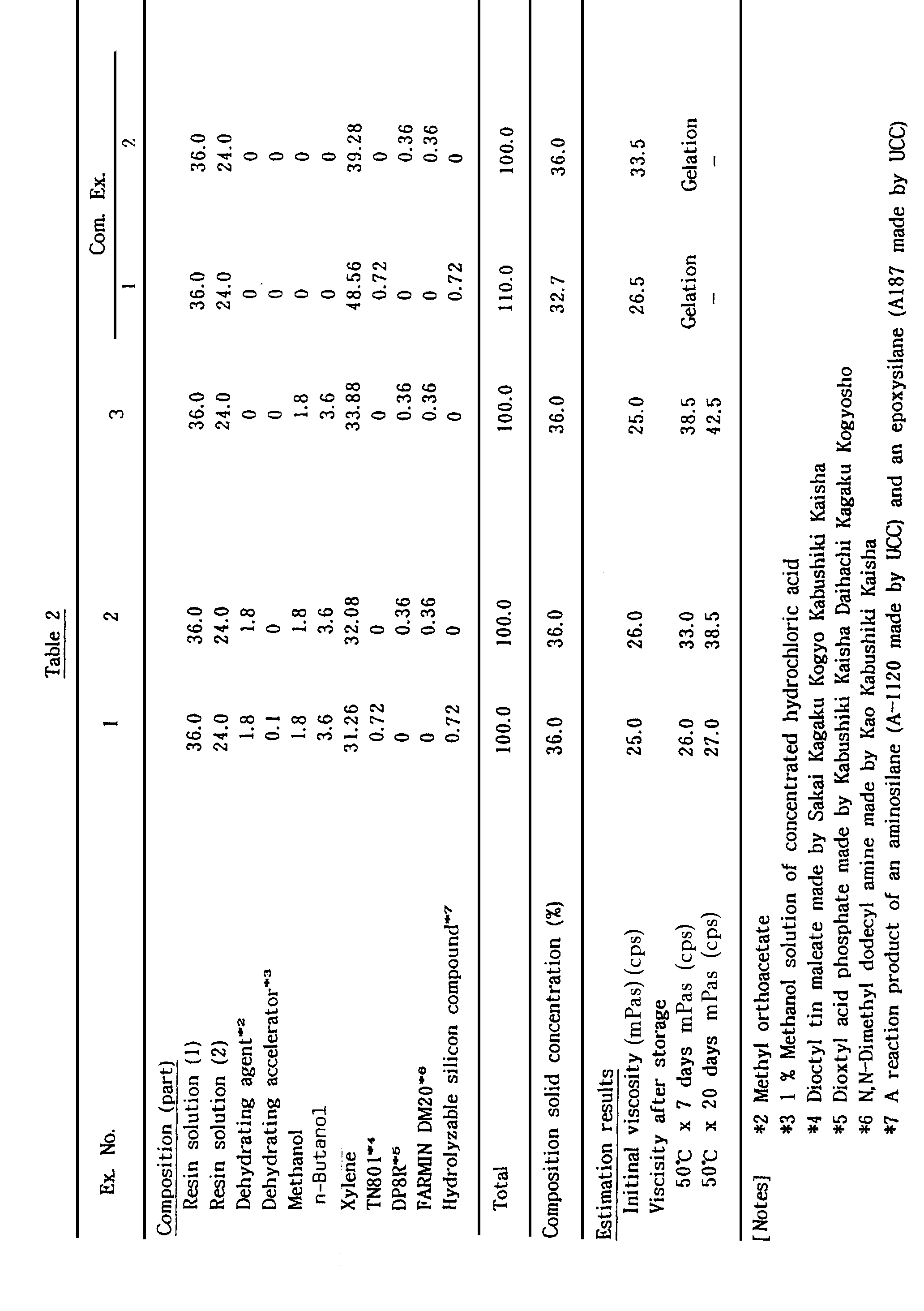

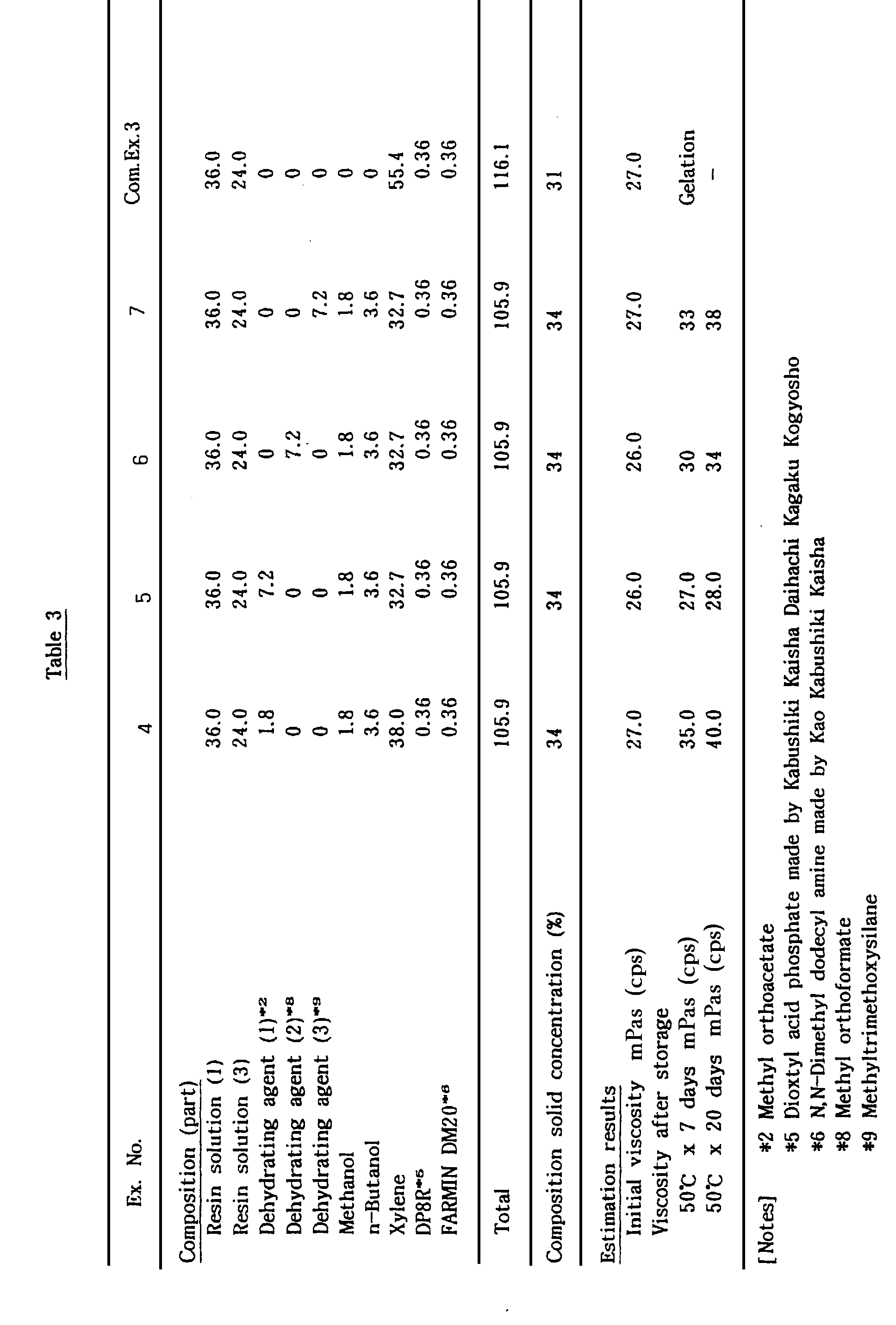

From the estimation results of Table 2 and Table 3, it would be recognized that the composition of the present invention is a one component composition improved in storage stability.

## Claims

1. A composition comprising:
(A) an acrylic resin having hydroxyl group,
(B) an alkoxysilyl group-containing acrylic copolymer having a group represented by the formula: 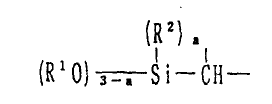 wherein R¹ is an alkyl group having 1 to 10 carbon atoms, R² is a hydrogen atom or a monovalent hydrocarbon group having 1 to 10 carbon atoms selected from the group consisting of an alkyl group, an aryl group and an aralkyl group, and a is 0, 1 or 2,
(C) a curing catalyst,
(E) a combination of methanol and n-butanol, and optionally (D) a dehydrating agent,
wherein said composition is in the form of a one component composition containing all said components (A), (B), (C), (E) and optionally (D).

2. The one component composition of Claim 1, wherein said acrylic resin having hydroxyl group (A) has a hydroxyl value of 10 to 300 mg KOH/g and a number average molecular weight of 1,500 to 40,000.

3. The one component composition of Claim 1 or 2, wherein said alkoxysilyl group-containing acrylic copolymer (B) is a polymer containing 5 to 90 % by weight of units of an alkoxysilyl group-containing monomer having a polymerizable unsaturated double bond and an alkoxysilyl group in its molecule.

4. The one component composition of Claim 1, 2 or 3, wherein said curing catalyst (C) is at least one member selected from the group consisting of an organotin compound, an acid phosphate, a mixture or a reaction product of an acid phosphate and an amine, a saturated or unsaturated polyvalent carboxylic acid, an acid anhydride of a saturated or unsaturated polyvalent carboxylic acid, a reactive silicon compound, an organic titanate compound, and an organic aluminum compound.

5. The one component composition of any of Claims 1 to 4, wherein said dehydrating agent (D) is a hydrolyzable ester compound.

6. The one component composition of any of Claims 1 to 5, wherein said dehydrating agent (D) is at least one hydrolyzable ester compound selected from the group consisting of methyl orthoformate, ethyl orthoformate, methyl orthoacetate, ethyl orthoacetate, methyltrimethoxysilane, y-methacryloyloxypropyltrimethoxysilane, vinyltrimethoxysilane, methyl silicate and ethyl silicate.

7. The one component composition of any of Claims 1 to 6, wherein said dehydrating agent (D) is methyl orthoacetate.

8. The one component composition of any of Claims 1 to 7, which further contains a dehydrating accelerator.

9. The one component composition of any of Claims 1 to 8, wherein said composition contains a hydrolyzable silicon compound.

10. The one component composition of Claim 9, wherein said hydrolyzable silicon compound is at least one member selected from the group consisting of a hydrolyzable silane compound, a condensation product of a partial hydrolyzate of a silane compound, a reaction product of a silane coupling agent containing amino group with a silane coupling agent containing epoxy group, a reaction product of a silane coupling agent containing amino group with a compound containing epoxy group, and a reaction product of a silane coupling agent containing epoxy group with an amine.

## Patentansprüche

1. Zusammensetzung, die umfaßt:
(A) ein Acrylharz mit Hydroxylgruppen,
(B) ein Alkoxysilylgruppen-enthaltendes Acrylcopolymer, mit einer Gruppe, die durch die Formel: 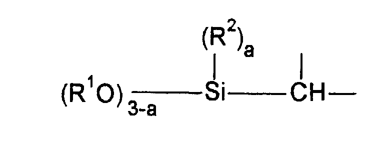 dargestellt wird, worin R¹ eine Alkylgruppe mit 1 bis 10 Kohlenstoffatomen ist, R² ein Wasserstoffatom oder eine monovalente Kohlenwasserstoffgruppe mit 1 bis 10 Kohlenstoffatomen ist, die ausgewählt wird aus der Gruppe, die aus einer Alkylgruppe, einer Arylgruppe und einer Aralkylgruppe besteht, und a 0, 1 oder 2 ist,
(C) ein Härtekatalysator,
(E) eine Kombination von Methanol und n-Butanol und wahlweise
(D) ein Dehydratisierungsmittel,
worin die erwähnte Zusammensetzung in Form einer Einkomponenten-Zusammensetzung vorliegt, die alle erwähnten Komponenten (A), (B), (C), (E) und wahlweise (D) enthält.

2. Einkomponenten-Zusammensetzung nach Anspruch 1, worin das Acrylharz mit der Hydroxylgruppe (A) einen Hydroxylwert von 10 bis 300 mg KOH/g und eine zahlenmittlere Molekülmasse von 1500 bis 40000 aufweist.

3. Einkomponenten-Zusammensetzung nach Anspruch 1 oder 2, worin das Alkoxysilylgruppen-enthaltende Acrylcopolymer (B) ein Polymer ist, das 5 bis 90 Gew.-% Einheiten eines Alkoxysilylgruppen-enthaltenden Monomers mit einer polymerisierbaren ungesättigten Doppelbindung und einer Alkoxysilylgruppe im Molekül aufweist.

4. Einkomponenten-Zusammensetzung nach Anspruch 1, 2 oder 3, worin der erwähnte Härtungskatalysator (C) mindestens ein Bestandteil ist, der aus der Gruppe ausgewählt wird, die besteht aus einer Organozinnverbindung, einem sauren Phosphat, einer Mischung oder einem Reaktionsprodukt eines sauren Phosphats und eines Amins, einer gesättigten oder ungesättigten polyvalenten Carbonsäure, einem Säureanhydrid einer gesättigten oder ungesättigten polyvalenten Carbonsäure, einer reaktiven Siliciumverbindung, einer organischen Titanatverbindung und einer organischen Aluminiumverbindung.

5. Einkomponenten-Zusammensetzung nach irgend einem der Ansprüche 1 bis 4, worin das erwähnte Dehydratisierungsmittel (D) eine hydrolysierbare Esterverbindung ist.

6. Einkomponenten-Zusammensetzung nach irgend einem der Ansprüche 1 bis 5, worin das erwähnte Dehydratisierungsmittel (D) mindestens eine hydrolysierbare Esterverbindung ist, die aus der Gruppe ausgewählt wird, die besteht aus Methylorthoformiat, Ethylorthoformiat, Methylorthoacetat, Ethylorthoacetat, Methyltrimethoxysilan, γ-Methacryloyloxypropyltrimethoxysilan, Vinyltrimethoxysilan, Methylsilikat und Ethylsilikat.

7. Einkomponenten-Zusammensetzung nach irgend einem der Ansprüche 1 bis 6, worin das erwähnte Dehydratisierungsmittel (D) Methylorthoacetat ist.

8. Einkomponenten-Zusammensetzung nach irgend einem der Ansprüche 1 bis 7, die weiter ein Dehydratisierungsbeschleunigungsmittel enthält.

9. Einkomponenten-Zusammensetzung nach irgend einem der Ansprüche 1 bis 8, worin die erwähnte Zusammensetzung eine hydrolysierbare Siliciumverbindung enthält.

10. Einkomponenten-Zusammensetzung nach Anspruch 9, worin die erwähnte hydrolysierbare Siliciumverbindung mindestens ein Bestandteil ist, der aus der Gruppe ausgewählt wird, die besteht aus einer hydrolysierbaren Silanverbindung, einem Kondensationsprodukt eines partiellen Hydrolysates einer Silanverbindung, einem Reaktionsprodukt eines Silankupplungsmittels, das eine Aminogruppe enthält, mit einem Silankupplungsmittel, das eine Epoxygruppe enthält, einem Reaktionsprodukt eines Silankupplungsmittels, das eine Aminogruppe enthält, mit einer Verbindung, die eine Epoxygruppe enthält, und einem Reaktionsprodukt eines Silankupplungsmittels, das eine Epoxygruppe enthält, mit einem Amin.

## Revendications

1. Composition comprenant :
(A) une résine acrylique à groupe hydroxyle,
(B) un copolymère acrylique à groupe alcoxysilyle ayant un groupe représenté par la formule : 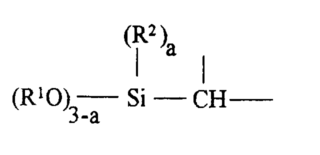 dans laquelle R¹ est un groupe alkyle ayant 1 à 10 atomes de carbone, R² est un atome d'hydrogène ou un groupe hydrocarboné monovalent ayant 1 à 10 atomes de carbone choisi dans le groupe constitué par un groupe alkyle, un groupe aryle et un groupe arylalkyle et n est 0, 1 ou 2.
(C) un catalyseur de durcissement,
(E) une combinaison de méthanol et de n-butanol et éventuellement
(D) un agent déshydratant,
ladite composition étant sous la forme d'une composition à un composant contenant tous lesdits composants (A), (B), (C), (E) et, éventuellement, (D).

2. Composition à un composant selon la revendication 1, dans laquelle ladite résine acrylique à groupe hydroxyle (A) a un indice d'hydroxyle de 10 à 300 mg de KOH/g et une masse moléculaire moyenne en nombre de 1 500 à 40 000.

3. Composition à un composant selon la revendication 1 ou 2, dans laquelle ledit copolymère acrylique à groupe alcoxysilyle (B) est un polymère contenant 5 à 90 % en masse d'unités d'un monomère contenant un groupe alcoxysilyle, dont la molécule possède une double liaison insaturée polymérisable et un groupe alcoxysilyle.

4. Composition à un composant selon la revendication 1, 2 ou 3, dans laquelle ledit catalyseur de durcissement (C) est au moins un élément choisi dans le groupe constitué par un composé organique de l'étain, un phosphate acide, un mélange ou un produit de réaction d'un phosphate acide et d'une amine, un acide carboxylique polyvalent saturé ou insaturé, un anhydride d'acide d'un acide carboxylique polyvalent saturé ou insaturé, un composé du silicium réactif, un composé organique de titanate et un composé organique de l'aluminium.

5. Composition à un composant selon une quelconque des revendications 1 à 4, dans laquelle ledit agent déshydratant (D) est un composé ester hydrolysable.

6. Composition à un composant selon une quelconque des revendications 1 à 5, dans laquelle ledit agent déshydratant (D) est au moins un composé ester hydrolysable choisi dans le groupe constitué par l'orthoformiate de méthyle, l'orthoformiate d'éthyle, l'orthoacétate de méthyle, l'orthoacétate d'éthyle, le méthyltriméthoxysilane, le γ-méthacryloyloxypropyltriméthoxysilane, le vinyltriméthoxysilane, le silicate de méthyle et le silicate d'éthyle.

7. Composition à un composant selon une quelconque des revendications 1 à 6, dans laquelle ledit agent déshydratant (D) est l'orthoacétate de méthyle.

8. Composition à un composant selon une quelconque des revendications 1 à 7, qui contient en outre un accélérateur de déshydratation.

9. Composition à un composant selon une quelconque des revendications 1 à 8, ladite composition contenant un composé hydrolysable du silicium.

10. Composition à un composant selon la revendication 9, dans laquelle ledit composé hydrolysable du silicium est au moins un élément choisi dans le groupe constitué par un composé hydrolysable de silane, un produit de condensation d'un hydrolysat partiel d'un composé de silane, un produit de réaction d'un agent de couplage dérivé d'un silane contenant un groupe amino avec un agent de couplage dérivé d'un silane contenant un groupe époxy, un produit de réaction d'un agent de couplage dérivé d'un silane contenant un groupe amino avec un composé contenant un groupe époxy et un produit de réaction d'un agent de couplage dérivé d'un silane contenant un groupe époxy avec une amine.
